# EUROPEAN PATENT APPLICATION

(11) **EP 3 190 556 A1**
(43) Date of publication of application: **12.07.2017**
(21) Application number: 16205295.5
(22) Date of filing: 20.12.2016
(51) Int. Cl.: G06Q 20/32, H04W 4/00, G06Q 20/34

(54) **ELECTRONIC APPARATUS AND OUTPUT APPARATUS**

(30) Priority: 25.12.2015 JP 2015254132
(71) Applicant: Toshiba TEC Kabushiki Kaisha, Tokyo 141-0032 (JP)
(72) Inventor: ADACHI, Kazunobu, Izunokuni-shi, Shizuoka (JP)
(74) Representative: Takeuchi, Maya

(57) **Abstract**

According to an embodiment, an electronic apparatus receives access for acquiring information to be output from an output apparatus and provides the information to be output to the output apparatus. The electronic apparatus includes a storage device and a processor. The storage device stores an identifier of an output apparatus permitted for the access and information to be provided to the output apparatus permitted for the access in association with each other. The processor transmits the information to be provided to the output apparatus through the communication interface on condition that the identifier is stored in the storage device.

## Description

### FIELD

An embodiment described here generally relates to an output apparatus that outputs information, and an electronic apparatus that provides information to be output by the output apparatus.

### BACKGROUND

In the past, payment, i.e., settlement has been made using card media such as a credit card and a debit card in shops and the like.

Such card media holds settlement information for settlement, such as a registry number of a credit settlement service. On the basis of the settlement information, settlement processing is performed.

Further, the following technology has been recently proposed, which is capable of registering settlement information in an electronic apparatus such as a mobile terminal and outputting the settlement information from the electronic apparatus, to make settlement with the single device.

However, in the technology of the related art, a user needs to input authentication information such as a personal identification number in terms of security measures when outputting the settlement information from the electronic apparatus. This lacks convenience.

### BRIEF DESCRIPTION OF THE DRAWINGS

Fig. 1 is a diagram showing an example of a hardware configuration of an information output system including a first portable device and a second portable device according to an embodiment.
Fig. 2 is a diagram showing an example of a functional configuration of the information output system according to the embodiment.
Fig. 3 is a diagram showing an example of a data configuration of a management table according to the embodiment.
Fig. 4 is a flowchart showing information output processing executed by the information output system according to the embodiment.

### DETAILED DESCRIPTION

According to one embodiment, there is provided an electronic apparatus, which receives access for acquiring information to be output from an external output apparatus and provides the information to be output to the output apparatus.

The electronic apparatus includes a communication interface, a storage device, and a processor.

The communication interface performs wireless communication with the outside.

The storage device stores an identifier of an output apparatus and information to be provided to the output apparatus in association with each other, the output apparatus being capable of performing wireless communication with the communication interface and being permitted for the access.

The processor transmits the information to be provided to the output apparatus through the communication interface, the information to be provided being stored in association with the identifier of the output apparatus, on condition that the identifier is stored in the storage device.

Preferably, upon reception of the access from the output apparatus through the communication interface, the processor determines whether the identifier is stored in the storage device or not.

Preferably, the communication interface receives the identifier from the output apparatus, the identifier serving as the access from the output apparatus.

Preferably, the processor determines whether the identifier received through the communication interface is stored in the storage device or not.

Preferably, the processor transmits the information to be provided to the output apparatus through the communication interface, in a state capable of being output to the outside by the output apparatus.

Preferably, on condition that the identifier of the output apparatus is not stored in the storage device, the processor performs pairing processing for confirming permission for the access from the output apparatus.

Preferably, the processor prompts the user to give an instruction to determine, as the pairing processing, whether to permit the access from the output apparatus.

The electronic apparatus may further comprise an operation device that receives an instruction from the user.

Preferably, the processor prompts the user to give an instruction to determine whether to permit the access from the output apparatus through the operation device.

The electronic apparatus may further comprise a display device that receives an instruction from the user.

Preferably, the processor prompts the user to give an instruction to determine whether to permit the access from the output apparatus through the display device.

Preferably, the processor stores the identifier of the output apparatus permitted for the access in the storage device in association with the information to be provided to the output apparatus permitted for the access by the pairing processing.

The present invention also relates to an output apparatus, which accesses an external electronic apparatus and acquires information to be output that is stored in the electronic apparatus, the output apparatus comprising: a communication interface that performs wireless communication with the electronic apparatus; a transmission device that transmits the information to be output to the outside; and a processor that acquires information to be output from the electronic apparatus permitted for access through the communication interface, the information to be output being associated with an identifier of the output apparatus, and outputs the acquired information to be output through the transmission device.

Preferably, after communication for acquiring the information to be output is established with the electronic apparatus permitted for access, the processor disconnects the communication with the electronic apparatus at a predetermined timing.

Preferably, after the information to be output is output, the processor disconnects communication with the electronic apparatus at a predetermined timing.

Preferably, the processor provides notification that communication for acquiring the information to be output is established with the electronic apparatus permitted for access.

The present invention further relates to a settlement system comprising the above-mentioned electronic apparatus, and the above-mentioned output apparatus.

The cooperation of the electronic apparatus with the output apparatus enables settlement information stored in the storage device to be output through the output device.

Further, the cooperation of the output device with the electronic device enables the settlement information stored in the first portable device to be output from the transmission device. This can restrict an output apparatus capable of outputting the settlement information of the electronic apparatus to the output device for which pairing with the electronic apparatus is completed, and can thus ensure security related to output of the information.

Furthermore, the user can output the settlement information stored in the electronic apparatus from the output device without inputting authentication information such as a personal identification number. This can lead to improvement in convenience related to output of the information.

Hereinafter, an embodiment will be described as non-limiting examples, with reference to the drawings.

In the drawings, the same reference symbols represent the same or similar parts.

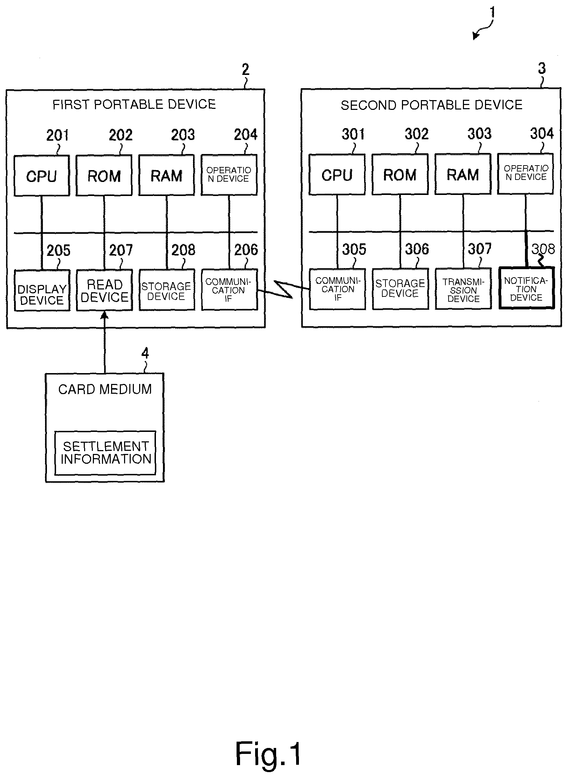

First, a hardware configuration of an information output system according to an embodiment will be described with reference to Fig. 1.

Fig. 1 is a block diagram showing an example of a hardware configuration of an information output system according to this embodiment. As shown in Fig. 1, an information output system 1 includes a first portable device 2 and a second portable device 3.

The first portable device 2 is an electronic apparatus that is accessed, by the second portable device 3, (output apparatus) to acquire information to be output, and provides the information to be output to the second portable device 3.

The first portable device 2 is an electronic apparatus that can be carried by a user.

For example, the first portable device 2 is a smartphone, a tablet terminal, a laptop personal computer (PC), or the like.

Further, the second portable device 3 is an output apparatus that accesses the first portable device 2 and acquires information to be output, which is stored in the first portable device 2.

The second portable device 3 is an output apparatus that can be carried by the same user as the user carrying the first portable device 2.

The second portable device 3 has a function of outputting the acquired information to be output to an external apparatus such as a settlement terminal.

For example, the second portable device 3 is a wristwatch, a wristband-type electronic apparatus, a smart key of an automobile, or the like having an output function such as near field communication (NFC).

It should be noted that out of two electronic apparatuses having similar functions, any one of them may be set as the first portable device 2, and the other one may be set as the second portable device 3.

As shown in Fig. 1, the first portable device 2 includes a central processing unit (CPU) 201, a read only memory (ROM) 202, a random access memory (RAM) 203, an operation device 204, a display device 205, a communication interface 206 (hereinafter, described as communication IF 206), a read device 207, a storage device 208, and the like.

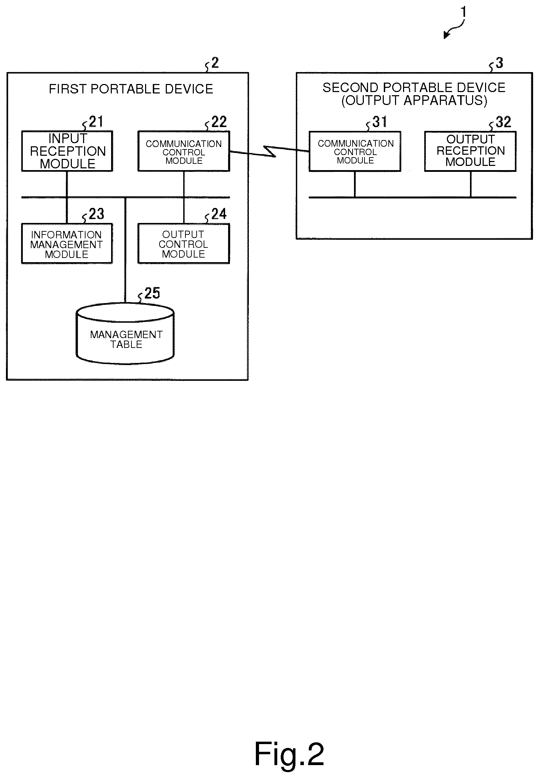

The CPU 201 is a processor of the first portable device 2. The CPU 201 collectively controls the operation of the first portable device 2. Further, the CPU 201 executes programs stored in the ROM 202, the storage device 208, and the like by using the RAM 203 as a work area, and thus achieves functions of various functional modules (see Fig. 2), which will be described later.

The operation device 204 includes input devices such as a keyboard and a pointing device.

The operation device 204 outputs an operation signal to the CPU 201, the operation signal corresponding to an operation or an instruction of the user.

The display device 205 includes a display such as a liquid crystal display (LCD). The display device 205 displays various types of information under the control of the CPU 201.

It should be noted that the display device 205 may include a touch panel display. In this case, the touch panel of the display device 205 functions as the operation device 204.

The communication IF 206 is a communication interface that can perform wireless communication with the second portable device 3.

For example, for the communication IF 206 of this embodiment, a communication interface conforming to a wireless communication standard such as Bluetooth (registered trademark) can be used.

The read device 207 is a reader that reads information from an external storage medium.

For example, an NFC reader such as an integrated circuit (IC) card reader can be used for the read device 207 of this embodiment. Further, an imaging apparatus, a code reader, or the like capable of reading characters or a code symbol (barcode etc.) described on the surface of the card medium 4 can be used for the read device 207.

In this embodiment, the read device 207 reads information for settlement that is held in the card medium 4 (hereinafter, described as settlement information) from the card medium 4 such as a credit card, a prepaid card, and a debit card.

The settlement information includes a registry number of a credit settlement service, for example.

Shops that can make settlement by the card medium 4 (settlement information) can electronically make settlement by, for example, making a credit inquiry to a payment card company on the basis of the registry number included in the settlement information, and the like.

The storage device 208 is a flash memory, a solid state drive (SSD), a hard disk drive (HDD), or the like.

The storage device 208 stores various programs executed by the CPU 201 and various types of setting information.

Further, the storage device 208 stores a management table 25 (see Fig. 2) under the control of the CPU 201. The management table 25 will be described later.

Meanwhile, as shown in Fig. 1, the second portable device 3 includes a CPU 301, a ROM 302, a RAM 303, an operation device 304, a communication interface 305 (hereinafter, described as communication IF 305), a storage device 306, a transmission device 307, a notification device 308, and the like.

The CPU 301 is a processor of the second portable device 3. The CPU 301 collectively controls the operation of the second portable device 3. Further, the CPU 301 executes programs stored in the ROM 302, the storage device 306, and the like by using the RAM 303 as a work area, and thus achieves functions of various functional modules (see Fig. 2), which will be described later.

The operation device 304 includes an input device such as an operation button.

The operation device 304 outputs an operation signal to the CPU 301, the operation signal corresponding to an operation or an instruction of the user.

The communication IF 305 is a communication interface that can perform wireless communication with the first portable device 2.

The storage device 306 is a flash memory or the like.

The storage device 306 stores various programs executed by the CPU 301 and various types of setting information.

The transmission device 307 is a device capable of transmitting (outputting) information to an external apparatus.

For example, a wireless communication device employing the NFC technology can be used for the transmission device 307 of this embodiment. In this case, when entering a readable area of an external apparatus (NFC reader), the transmission device 307 is connected to the external apparatus to transmit (output) information.

As will be described later, the notification device 308 is a device that provides notification that communication for acquiring settlement information (information to be output by the second portable device 3) is established with the first portable device 2 that permits access from the second portable device 3.

The notification device 308 is a display device or an indicator lamp, for example.

Next, a functional configuration of the information output system 1 including the first portable device 2 and the second portable device 3 will be described with reference to Fig. 2.

Fig. 2 is a block diagram showing an example of the functional configuration of the information output system 1.

As shown in Fig. 2, the CPU 201 of the first portable device 2 includes functional modules, i.e., an input reception module 21, a communication control module 22, an information management module 23, and an output control module 24. Further, the first portable device 2 includes a management table 25 as a storage means. The management table 25 is stored in the storage device 208.

The input reception module 21 receives an input of information to the first portable device 2. For example, the input reception module 21 receives an input of settlement information.

Here, a method of inputting the settlement information is not particularly determined.

For example, the input reception module 21 may receive settlement information that is read from the card medium 4 by the read device 207.

Further, the input reception module 21 may receive settlement information that is manually input by the user through the operation device 204.

The communication control module 22 functions as a communication means, a determination means, and a pairing means. The communication control module 22 cooperates with the communication IF 206, to control the communication with the second portable device 3.

Specifically, upon reception of access from the second portable device 3, the communication control module 22 determines whether a terminal identifier of the second portable device 3 is registered (stored) or not in the management table 25 that will be described later.

It should be noted that the terminal identifier is transmitted from the second portable device 3, which is access from the second portable device 3. For example, the terminal identifier includes a Bluetooth device (BD) address of the communication IF 305 of the second portable device 3, a media access control (MAC) address thereof, a peculiar serial number assigned to the second portable device 3, and the like.

When determining that the terminal identifier is not registered in the management table 25, the communication control module 22 determines that the access from the second portable device 3 is the first access.

The communication control module 22 executes pairing processing for confirming permission for access from the second portable device 3 with the user of the first portable device 2.

In the pairing processing, the communication control module 22 causes the display device 205 to display a screen that prompts the user to operate an operation element for selecting whether to permit the access or not, or to input a passkey. Upon operation for access permission or input of a passkey, the communication control module 22 determines that the access is permitted.

The operation through the operation element or the input of the passkey may be performed in the operation device 204.

In other words, the communication control module 22 performs the pairing processing described above, that is, prompts the user to give an instruction to determine whether to permit the access from the output apparatus through the display device 205 or the operation device 204.

When the access from the second portable device 3 is permitted, the communication control module 22 cooperates with the information management module 23, to register the terminal identifier of the second portable device 3 in the management table 25 that will be described later.

Since the terminal identifier is registered in the management table 25, the second portable device 3 is treated as a pairing apparatus for which pairing with the first portable device 2 (communication control module 22) is completed.

The communication control module 22 establishes communication with the second portable device 3 for which pairing is completed, and controls exchange of various types of information.

For example, the communication control module 22 cooperates with the information management module 23, to provide settlement information to the second portable device 3 for which pairing is completed.

It should be noted that for the second portable device 3 whose terminal identifier is already registered, the communication control module 22 establishes communication therewith without performing the pairing processing.

The information management module 23 stores the management table 25 in the storage device 208 and manages the management table 25.

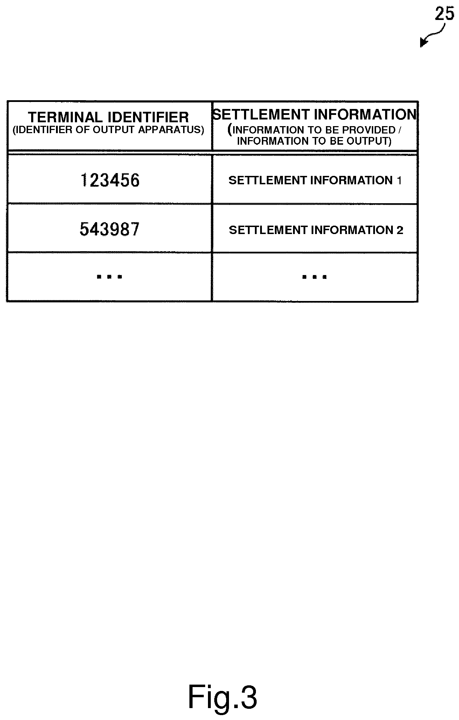

Here, Fig. 3 is a diagram showing an example of a data configuration of the management table 25.

As shown in Fig. 3, the management table 25 stores the terminal identifier of the pairing apparatus (second portable device 3) for which pairing with the first portable device 2 is completed and settlement information to be output (target information) in association with each other. It should be noted that the number of pieces of settlement information and terminal identifiers registered in the management table 25 are not particularly determined.

It should be noted that the settlement information is information to be provided that the first portable device 2 provides to the second portable device 3 (output apparatus), and is also information to be output that the second portable device 3 acquires from the first portable device 2 and outputs to an external apparatus (for example, settlement terminal).

Further, the information management module 23 functions as a register means.

Specifically, the information management module 23 registers the settlement information received by the input reception module 21 in the management table 25.

Furthermore, the information management module 23 registers, in management table 25, the terminal identifier of the second portable device 3 for which access (connection) is permitted by the pairing processing of the communication control module 22, the terminal identifier being set as a terminal identifier of the pairing apparatus. The information management module 23 then manages association between the settlement information and the terminal identifier.

It should be noted that the settlement information and the terminal identifier may be automatically associated with each other by the information management module 23 or manually associated with each other by the user of the first portable device 2.

For example, when the settlement information and the terminal identifier are automatically associated with each other, the information management module 23 associates the terminal identifier of the second portable device 3 for which access is permitted by the pairing processing with each piece of the settlement information registered in the management table 25, and registers the association.

Alternatively, the information management module 23 associates the settlement information received by the input reception module 21 with each terminal identifier registered in the management table 25, and registers the association.

Further, when the settlement information and the terminal identifier are manually associated with each other, the information management module 23 associates the settlement information and the terminal identifier with each other according to an instruction of the user.

In this case, the user can give an instruction to associate a specific piece of settlement information with a specific terminal identifier, among the pieces of settlement information and terminal identifiers registered in the management table 25.

It should be noted that for the purpose of security, the information management module 23 desirably restricts a user operation on the management table 25 (hereinafter, described as table operation).

The table operation includes, for example, an operation of giving an instruction to refer to or edit the management table 25.

Further, the table operation also includes an operation of causing information registered in the management table 25 to be output from a devise other than the communication IF 206, such as the display device 205 or the read device 207.

A method of restricting the table operation is not particularly determined.

For example, the information management module 23 may restrict a user who is permitted to perform the table operation by using the well-known authentication technologies such as password authentication and biometric authentication.

Referring back to the description of Fig. 2, the output control module 24 of the first portable device 2 is a functional module corresponding to an output means.

The output control module 24 controls providing of the settlement information to the second portable device 3 with which communication is established, on the basis of the management table 25.

Specifically, when the communication with the second portable device 3 is established by the control of the information management module 23, the output control module 24 identifies the settlement information, which is associated with the terminal identifier of the second portable device 3 and registered, from the management table 25.

The output control module 24 then cooperates with the communication control module 22, to provide the identified settlement information to the second portable device 3. At that time, the identified settlement information is provided to the second portable device 3 in a state capable of being output by the second portable device 3.

Here, a method of providing the settlement information is not particularly determined.

For example, the output control module 24 may transmit the settlement information by a push transmission method or pull transmission method.

Further, the output control module 24 may permit the second portable device 3 to access the management table 25, to provide the identified settlement information to the second portable device 3 in a state capable of being referred to by the second portable device 3.

Further, when identifying pieces of settlement information, the output control module 24 may provide all the pieces of settlement information to the second portable device 3 or allows the user to select settlement information to be provided.

In the latter case, the output control module 24 may display on the display device 205 a selection screen from which information to be provided can be selected among the identified pieces of settlement information, and then provide the settlement information selected by the user to the second portable device 3.

Meanwhile, the CPU 301 of the second portable device 3 includes a communication control module 31 and an output control module 32 as functional modules.

The communication control module 31 is a functional module corresponding to a communication means.

The communication control module 31 cooperates with the communication IF 305, to control communication with the first portable device 2.

For example, the communication control module 31 controls pairing with the first portable device 2 (communication control module 22).

It should be noted that the communication control module 31 transmits the terminal identifier to the first portable device 2 at the time of access to or communication with the first portable device 2. The terminal identifier includes a BD address, a MAC address, and a serial number of the communication IF 305, and the like.

Further, the communication control module 31 functions as an acquisition means.

For example, when the settlement information is provided by a push transmission method, the communication control module 31 receives the settlement information transmitted from the first portable device 2.

Further, when the settlement information is provided by a pull transmission method, the communication control module 31 transmits an acquisition request to the first portable device 2 and causes the first portable device 2 to transmit the settlement information.

Further, when the settlement information is provided in a state capable of being referred to, the communication control module 31 refers to the settlement information registered in the management table 25 of the first portable device 2.

Further, the communication control module 31 functions as a notification means.

Specifically, when communication with the first portable device 2 is established, the communication control module 31 notifies the user of a state capable of communicating with the first portable device 2, i.e., a state capable of outputting the settlement information.

Here, a method of providing the notification is not particularly determined.

In this embodiment, the second portable device 3 includes the notification device 308, and the communication control module 31 provides the notification through the notification device 308.

Further, the communication control module 31 functions as a disconnection means.

Specifically, the communication control module 31 disconnects the communication with the first portable device 2 at a predetermined timing.

With the disconnection of the communication with the first portable device 2, the communication control module 31 deactivates the notification described above and deletes the settlement information temporarily stored in the RAM 303 or the like.

Here, a timing of the disconnection is not particularly determined and can be set arbitrarily.

For example, the communication control module 31 may measure an elapsed time after the communication with the first portable device 2 is established and, when a predetermined period of time (e.g., two minutes) elapses, may disconnect the communication with the first portable device 2.

Further, the communication control module 31 may measure an elapsed time after the output control module 32 outputs the settlement information and, when a predetermined period of time (e.g., one minute) elapses, disconnect the communication with the first portable device 2.

In such a manner, automatic disconnection of the communication with the first portable device 2 can restrict a period of time during which the settlement information can be output and a period of time during which the settlement information is held. This can lead to improvement in security.

The output control module 32 is a functional module corresponding to an output means.

Specifically, the output control module 32 cooperates with the communication control module 31, to output the settlement information provided by the first portable device 2 to an external apparatus with use of the transmission device 307 or the like.

Here, a timing at which the settlement information is output is not particularly determined.

For example, the output control module 32 may transmit (output) the settlement information to an external apparatus according to an instruction given from the external apparatus connected to the transmission device 307.

Further, the output control module 32 may transmit (output) the settlement information to an external apparatus according to a user instruction through the operation device 304.

Further, the output control module 32 may control a timing at which the communication control module 31 acquires the settlement information.

For example, when the settlement information is provided by a pull transmission method or provided in a state capable of being referred to, the output control module 32 may cause the communication control module 31 to acquire the settlement information at a timing at which the transmission device 307 is connected to an external apparatus.

Further, when the settlement information is provided by a push transmission method, the output control module 32 may control the communication control module 31 to access the first portable device 2 at a timing at which the transmission device 307 is connected to an external apparatus.

With this configuration, the output control module 32 can cause the communication control module 31 to acquire the settlement information each time the transmission device 307 is connected to the external apparatus.

In such a manner, acquiring the settlement information from the first portable device 2 immediately before the settlement information is output to the external apparatus can shorten a period of time during which the second portable device 3 holds the settlement information. This can lead to improvement in security.

It should be noted that when pieces of settlement information are provided from the first portable device 2, the output control module 32 may output all the pieces of settlement information or output a piece of settlement information selected by the user.

In the latter case, the output control module 32 may display on the display device 205 a selection screen from which information to be output can be selected among the provided pieces of settlement information, and output the settlement information selected by the user.

Further, when the settlement information is provided in a state capable of being referred to, the output control module 32 may identify the settlement information from the management table 25, the settlement information being associated with the terminal identifier of the second portable device 3 and registered.

In this case, the output control module 32 cooperates with the communication control module 31, to identify appropriate settlement information from the management table 25 and then output the identified settlement information.

In the configuraton described above, when the user makes settlement (electronic settlement) based on the settlement information, the user can complete the settlement without using the card medium 4.

In this case, the user carries the first portable device 2 and the second portable device 3 and moves the second portable device 3 close to a settlement terminal including an NFC reader or the like that is communicable with the second portable device 3 (transmission device 307).

When entering a readable area of the settlement terminal (NFC reader), the second portable device 3 cooperates with the first portable device 2 to output the settlement information to the settlement terminal, the settlement information being provided from the first portable device 2.

The settlement terminal executes processing related to electronic settlement on the basis of the settlement information input from the second portable device 3.

It should be noted that an output destination of the settlement information is not limited to the settlement terminal and may be another external apparatus.

Further, the output means for the settlement information is not limited to the transmission device 307, and another output means may output the settlement information. For example, when the second portable device 3 includes a display device, the output control module 32 may display the settlement information on this display device, to output the settlement information.

In this case, the output control module 32 may display content of the settlement information as it is or in a state encoded to a code symbol such as a barcode.

In the latter case, similarly to the above, the settlement terminal can execute the settlement processing by reading the code symbol displayed on the display device of the second portable device 3 with use of a code scanner or the like.

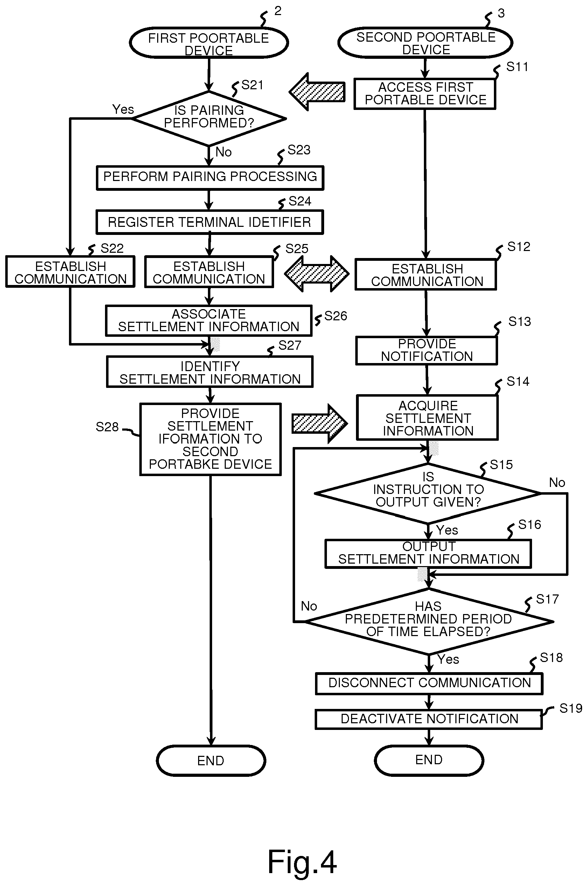

Next, exemplary operations of the first portable device 2 and the second portable device 3 will be described with reference to Fig. 4. Here, Fig. 4 is a flowchart showing information output processing executed in the information output system 1 including the first portable device 2 and the second portable device 3.

It is assumed that the settlement information of the card medium 4 is registered beforehand in the management table 25 of the first portable device 2.

First, in Step S11 of the second portable device 3 in Fig. 4, the CPU 301 (communication control module 31) accesses the first portable device 2 in accordance with an operation of the operation device 304 or the like.

Next, in Step S21 of the first portable device 2, upon reception of the access from the second portable device 3, the CPU 201 (communication control module 22) determines whether pairing has been made or not on the basis of the terminal identifier of the second portable device 3.

When the terminal identifier of the second portable device 3 is registered in the management table 25, the CPU 201 (communication control module 22) determines that pairing has been made (Yes in Step S21).

When it is determined that pairing has been made, the processing of the CPU 201 proceeds to Step S22. In Step S22, the CPU 201 (communication control module 22) establishes communication with the second portable device 3.

When communication with the second portable device 3 is established, the processing of the CPU 201 proceeds to Step S27.

Further, in Step S21, when the terminal identifier of the second portable device 3 is not registered in the management table 25, the CPU 201 (communication control module 22) of the first portable device 2 determines that the access from the second portable device 3 is the first access (No in Step S21). When it is determined that the access from the second portable device 3 is the first access, the processing of the CPU 201 proceeds to Step S23.

In Step S23, the CPU 201 (communication control module 22) executes pairing processing for confirming access permission with the user. When the CPU 201 receives an instruction given by the user to permit access from the second portable device 3, the processing of the CPU 201 proceeds to Step S24.

In Step S24, the CPU 201 (communication control module 22) registers the terminal identifier of the second portable device 3 in the management table 25. Furthermore, in Step S25, the CPU 201 establishes communication with the second portable device 3.

Next, in Step S26, the CPU 201 (information management module 23) associates the settlement information registered in the management table 25 with the terminal identifier registered in Step S24. It should be noted that in Step S26 the settlement information and the terminal identifier may be associated with each other automatically or according to an operation of the user.

When the settlement information and the terminal identifier are associated with each other, the processing of the CPU 201 proceeds to Step S27.

In Step S27, the CPU 201 (output control module 24) identifies the settlement information associated with the terminal identifier of the second portable device 3 from the management table 25.

Further, in Step S28, the CPU 201 provides the identified settlement information to the second portable device 3 and terminates the processing.

Meanwhile, in Step S25 described above, when communication with the second portable device 3 is established in the first portable device 2, in Step S12 of the second portable device 3, the CPU 301 (communication control module 31) establishes communication with the first portable device 2.

Further, in Step S13, the CPU 301 (communication control module 31) provides notification through the notification device 308 that communication for acquiring the settlement information (information to be output) is established with the first portable device 2 that permits access therefrom. In other words, the CPU 301 provides notification that the settlement information can be output.

Next, in Step S14, the CPU 301 (communication control module 31) acquires the settlement information provided from the first portable device 2.

Subsequently in Step S15, the CPU 301 (output control module 32) determines whether an instruction to output the settlement information is given or not.

When an instruction to output the settlement information is given (Yes in Step S15), the processing of the CPU 301 proceeds to Step S16.

In Step S16, the CPU 301 (output control module 32) outputs the settlement information acquired by the communication control module 31 (see Step S14) to the external apparatus through the transmission device 307 or the like.

When the settlement information is output to the external apparatus, the processing of the CPU 301 proceeds to Step S17. Further, in Step S15, when an instruction to output the settlement information is not given (No in Step S15), the processing of the CPU 301 proceeds to Step S17.

In Step S17, the CPU 301 (communication control module 31) determines whether a predetermined period of time has elapsed or not after the communication with the first portable device 2 is established or the output of the settlement information is completed.

When it is determined that the predetermined period of time has not elapsed (No in Step S17), the processing of the CPU 301 returns to Step S 15.

Further, when it is determined that the predetermined period of time has elapsed (Yes in Step S17), the processing of the CPU 301 proceeds to Step S18. In Step S18, the CPU 301 (communication control module 31) disconnects the communication with the first portable device 2. Further, in Step S19, the CPU 301 deactivates the notification (see Step S13) and terminates the processing.

As described above, according to this embodiment, the cooperation of the first portable device 2 with the second portable device 3 enables the settlement information stored in the storage device 208 (management table 25) to be output through the second portable device 3.

Further, the cooperation of the second portable device 3 with the first portable device 2 enables the settlement information stored in the first portable device 2 to be output from the transmission device 307.

This can restrict an output apparatus capable of outputting the settlement information of the first portable device 2 to the second portable device 3 for which pairing with the first portable device 2 is completed, and can thus ensure security related to output of the information.

Furthermore, the user can output the settlement information stored in the first portable device 2 from the second portable device 3 without inputting authentication information such as a personal identification number. This can lead to improvement in convenience related to output of the information.

The embodiment described above is presented as an example and is not restrictive.

For example, in the embodiment described above, the output control module 24 of the first portable device 2 identifies the settlement information, but the present invention is not limited thereto and the second portable device 3 may identify the settlement information. When such a configuration is employed, for example, in the first portable device 2, the output control module 24 provides the management table 25 so as to be referred to.

Meanwhile, in the second portable device 3, the output control module 32 cooperates with the communication control module 31, to identify the settlement information registered in association with the terminal identifier of the second portable device 3 from the management table 25 of the first portable device 2.

This enables the second portable device 3 to identify the settlement information stored in association with the terminal identifier of the second portable device 3 and to output the settlement information.

Further, the above embodiment has described the example in which the settlement information is output, but the information to be provided by the first portable device 2 or the information to be output by the second portable device 3 are not limited thereto.

For example, information read from a storage medium other than the card medium 4 may be associated with the terminal identifier of the second portable device 3, registered in the management table 25, and output through the second portable device 3.

Furthermore, the above embodiment has described the example in which the second portable device 3 disconnects the communication, but disconnection of the communication is not limited thereto and the first portable device 2 may disconnect the communication. When such a configuration is employed, the communication control module 22 of the first portable device 2 is caused to function as a disconnection means, similar to the communication control module 31 of the second portable device 3. For example, the communication control module 22 of the first portable device 2 measures an elapsed time after the communication with the second portable device 3 is established and, when a predetermined period of time (e.g., two minutes) elapses, disconnects the communication with the second portable device 3. Further, the communication control module 22 of the first portable device 2 measures an elapsed time after the output control module 24 provides the settlement information of the second portable device 3 and, when a predetermined period of time (e.g., one minute) elapses, disconnects the communication with the second portable device 3.

Programs executed in the first portable device 2 and the second portable device 3 according to the embodiment described above may be recorded on a computer-readable recording medium such as a floppy (registered trademark) disk, a CD (Compact Disc), a CD-R (Compact Disc-Recordable), a CD-ROM (Compact Disc Read Only Memory), a DVD (Digital Versatile Disc), an SD memory card, and a USB (Universal Serial Bus) memory in the form of installable or executable file and then provided.

Further, programs executed in the first portable device 2 and the second portable device 3 according to the embodiment described above may be provided by being stored in a computer connected to a network such as the Internet, downloaded via the network, and the like.

Further, the functional modules of the first portable device 2 and the second portable device 3 according to the embodiment described above can be achieved by one or more processing circuits. Here, the processing circuits include hardware such as the processor described above (e.g., the CPUs 201 and 301), an application specific integrated circuit (ASIC) designed so as to achieve the functions of the respective functional modules, and a circuit module.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. An electronic apparatus (2), which receives access for acquiring information to be output from an external output apparatus (3) and provides the information to be output to the output apparatus, the electronic apparatus comprising:
a communication interface (206) that performs wireless communication with the outside;
a storage device that stores an identifier of the output apparatus and information to be provided to the output apparatus in association with each other, the output apparatus being capable of performing wireless communication with the communication interface and being permitted for the access; and
a processor that transmits the information to be provided to the output apparatus through the communication interface, the information to be provided being stored in association with the identifier of the output apparatus, on condition that the identifier is stored in the storage device.

2. The electronic apparatus according to Claim 1, wherein
upon reception of the access from the output apparatus through the communication interface, the processor determines whether the identifier is stored in the storage device or not.

3. The electronic apparatus according to Claim 2, wherein
the communication interface receives the identifier from the output apparatus, the identifier serving as the access from the output apparatus.

4. The electronic apparatus according to Claim 3, wherein
the processor determines whether the identifier received through the communication interface is stored in the storage device or not.

5. The electronic apparatus according to any one of claims 1 to 4, wherein
the processor transmits the information to be provided to the output apparatus through the communication interface, in a state capable of being output to the outside by the output apparatus.

6. The electronic apparatus according to any one of Claims 1 to 5, wherein
on condition that the identifier of the output apparatus is not stored in the storage device, the processor performs pairing processing for confirming permission for the access from the output apparatus.

7. The electronic apparatus according to Claim 6, wherein
the processor prompts the user to give an instruction to determine, as the pairing processing, whether to permit the access from the output apparatus.

8. The electronic apparatus according to Claim 7, further comprising an operation device that receives an instruction from the user, wherein
the processor prompts the user to give an instruction to determine whether to permit the access from the output apparatus through the operation device.

9. The electronic apparatus according to Claim 7 or 8, further comprising a display device that receives an instruction from the user, wherein
the processor prompts the user to give an instruction to determine whether to permit the access from the output apparatus through the display device.

10. The electronic apparatus according to any one of Claims 6 to 9, wherein
the processor stores the identifier of the output apparatus permitted for the access in the storage device in association with the information to be provided to the output apparatus permitted for the access by the pairing processing.

11. An output apparatus, which accesses an external electronic apparatus and acquires information to be output that is stored in the electronic apparatus, the output apparatus comprising:
a communication interface that performs wireless communication with the electronic apparatus;
a transmission device that transmits the information to be output to the outside; and
a processor that acquires information to be output from the electronic apparatus permitted for access through the communication interface, the information to be output being associated with an identifier of the output apparatus, and outputs the acquired information to be output through the transmission device.

12. The output apparatus according to Claim 11, wherein
after communication for acquiring the information to be output is established with the electronic apparatus permitted for access, the processor disconnects the communication with the electronic apparatus at a predetermined timing.

13. The output apparatus according to Claim 11 or 12, wherein
after the information to be output is output, the processor disconnects communication with the electronic apparatus at a predetermined timing.

14. The output apparatus according to any one of Claims 11 to 13, wherein
the processor provides notification that communication for acquiring the information to be output is established with the electronic apparatus permitted for access.

15. A settlement system comprising an electronic apparatus according to any one of claims 1 to 9, and an output apparatus according to any one of claims 10 to 14.
